# EUROPÄISCHE PATENTANMELDUNG

(11) **EP 4 527 263 A1**
(43) Veröffentlichungstag der Anmeldung: **26.03.2025**
(21) Anmeldenummer: 24200882.9
(22) Anmeldetag: 17.09.2024
(51) Int. Cl.: A47J 31/44, A47J 31/46, A47J 31/52

(54) **MILCHMODUL FÜR GETRÄNKEZUBEREITUNGSVORRICHTUNG MIT EINGANGSSEITIGEM SENSOR**

(30) Priorität: 19.09.2023 DE 102023125372
(71) Anmelder: Eugster/Frismag AG, 8580 Amriswil (CH)
(72) Erfinder: RIESSBECK, Wolfgang, 8597 Landschlacht (CH); VAN DE LÖCHT, Hendrik, 8586 Riedt bei Erlen (CH); MANGALATHU, Mario, 8132 Egg bei Zürich (CH)
(74) Vertreter: Patent- und Rechtsanwälte Behrmann Wagner PartG mbB

(57) **Zusammenfassung**

Milchmodul für eine Getränkezubereitungsvorrichtung (01), insbesondere eine Kaffee- und/oder Espressomaschine, mit einem Eingangsanschluss (04) zur Verbindung mit einem Milchvorratsbehälter, mit einem Erwärm- und/oder Aufschäumvorrichtung (14), die fluidleitend mit dem Eingangsanschluss (04) verbunden ist und einem Auslauf (16), der fluidleitend mit der Erwärm- und/oder Aufschäumvorrichtung (14) ausgebildet ist, so dass ein Milchprodukt von dem Eingangsanschluss (04) über die Erwärm- und/oder Aufschäumvorrichtung (14) zum Auslauf (16) geführt und dabei erwärmbar und/oder aufschäumbar ist, wobei fluidleitend zwischen Eingangsanschluss (04) und der Erwärm- und/oder Aufschäumvorrichtung (14) ein steuerbares Ventil (09) angeordnet ist, welches den Milchfluss jenseits des Ventils (09) steuert und wobei in einem Leitungsabschnitt (06) zwischen dem Ventil (09) und dem Eingangsanschluss (04) ein Temperatursensor (07) so angeordnet ist, dass der Temperatursensor (07) in unmittelbaren Kontakt mit der Milch im Leitungsabschnitt (06) bringbar ist.

## Beschreibung

Die vorliegende Erfindung betrifft ein Milchmodul für eine Getränkezubereitungsvorrichtung, insbesondere eine Kaffee- und/oder Espressomaschine nach dem Oberbegriff des Anspruchs 1.

Im Stand der Technik sind verschiedene Getränkezubereitungsvorrichtungen bekannt, die ein Milchmodul aufweisen, mit dem ein Milchprodukt erwärmt und/oder aufgeschäumt werden kann. Als Milchprodukt soll im Rahmen der nachfolgenden Offenbarung ein proteinhaltiges Lebensmittel verstanden werden, unabhängig von dessen Herkunft - tierisch oder pflanzlich Herkunft - oder Zusammensetzung.

Gewöhnlich wird das Milchmodul direkt oder indirekt mit einem entnehmbaren Milchvorratsbehälter fluidleitend verbunden, aus dem dann die Milch oder das Milchprodukt entnommen wird, um es im Milchmodul zu erwärmen und/oder aufzuschäumen.

Der Milchvorratsbehälter ist aus Hygiene- und Gesundheitsgründen in der Regel entnehmbar ausgebildet, um ihn vor und nach Benutzung des Milchmoduls gekühlt aufbewahren zu können, beispielsweise in einem Kühlschrank. Alternativ oder zusätzlich kann der Milchvorratsbehälter auch aktiv gekühlt ausgebildet sein.

Bei den gattungsgemäßen Getränkezubereitungsvorrichtungen, insbesondere Kaffee- und/oder Espressomaschinen, die mitunter auch als Kaffeevollautomaten bezeichnet werden, besteht ein besonderes Bedürfnis nach der Herstellung und Abgabe von unterschiedlichen Getränken oder Getränkespezialitäten, die jeweils mit möglichst gleichen oder konstanten Eigenschaften über einen langen Zeitraum hergestellt oder zubereitet werden. Dies betrifft beispielsweise aber keinesfalls ausschließlich die Temperatur, die Textur, den Geschmack, und das äußere Erscheinungsbild, wie beispielsweise die Farbe des Getränks. Im Hinblick auf erwärmte, insbesondere aufgeschäumte, Milchprodukte ist es zusätzlich wünschenswert, dass das erzeugte und abgegebene Ergebnis bei einem gewünschten, vordefinierten oder voreingestellten Getränk oder Getränkerezept im Hinblick auf Porengröße, Porenverteilung, Festigkeit und Verhältnis von Milch zu Schaum möglichst gleichbleibend oder konstant ist.

Vor diesem Hintergrund ist neben dem tatsächlich verwendeten Milchprodukt und dessen Eigenschaften oder Zusammensetzung die Temperatur des verwendeten Milchprodukts, mit der das Milchprodukt den Milchvorratsbehälter verlässt, eine besonders wesentliche Variable oder Einflussgröße. Denn diese Temperatur des Milchprodukts kann ohne Weiteres im Bereich von 20K, z.B. 4°C und 24°C, variieren. Dieser erhebliche Temperaturunterschied kann entsprechend starke Auswirkungen auf das Ergebnis des mit dem Milchmodul hergestellten, aufgeschäumten und/oder erwärmten Milchprodukt haben.

Im Stand der Technik sind bereits Ansätze bekannt, eine Temperatur des Milchprodukts zu erkennen, und das Milchmodul, bevorzugt geregelt in Abhängigkeit des erwärmten und/oder aufgeschäumten Milchprodukts anzusteuern. Ein Beispiel eines solchen Ansatzes ist aus der US 9,474,408 B2 bekannt. Der dortige Milchvorratsbehälter umfasst einen Thermofühler, der die Temperatur des Milchprodukts im Milchvorratsbehälter erfasst. Der besagte Sensor oder Thermofühler ist mit einer Steuereinrichtung verbunden, die wiederum auch die Milchpumpe zur Förderung des Milchprodukts aus dem Milchvorratsbehälter steuert. Auch im Auslass des Milchmoduls ist ein weiterer Sensor vorgesehen, der die Temperatur des aufgeschäumten und/oder erhitzten Milchprodukts misst und an die besagte Steuereinrichtung zurückkoppelt.

Die besagte Lösung ermöglicht zwar sowohl die Erfassung oder Messung der Temperatur des Milchprodukts vor dem Eintritt in das Milchmodul und auch die entsprechende Temperaturmessung nach der Erwärmung und/oder Aufschäumung, die Lösung ist aber sowohl von den eingesetzten Komponenten als auch vom Aufbau komplex und in verschiedener Hinsicht nachteilig. So ist beispielsweise die Realisierung eines Temperatursensors im Milchvorratsbehälter schwierig, da dies entweder die Entnehmbarkeit des Milchvorratsbehälters erschwert oder alternativ eine entsprechend komplexe zusätzliche elektronische und/oder datentechnische Schnittstelle zwischen einem entnehmbaren Milchvorratsbehälter und der Getränkezubereitungsvorrichtung, insbesondere der Steuereinrichtung erfordert, sodass beim Entnehmen des Milchvorratsbehälters der Sensor im Milchvorratsbehälter verbleiben kann und nur die entsprechend elektronische und/oder datentechnische Verbindung zeitweise unterbrochen wird.

Auch die Positionierung eines zweiten Temperatursensors im Auslauf des Milchmoduls führt zu einem zusätzlichen Aufwand auf der Vorrichtungsebene. Außerdem neigt das Milchprodukt im aufgewärmten und/oder aufgeschäumten Zustand stärker zur Anhaftung und Ausbildung von Verkrustungen an Materialoberflächen, sodass der dort angeordnete Sensor zur Anlagerung von Verschmutzung neigt, was sowohl hygienisch problematisch ist als auch die Temperaturmessung beeinflussen, insbesondere verfälschen, kann.

Vor diesem Hintergrund ist es die Aufgabe der vorliegenden Erfindung ein Milchmodul für eine Getränkezubereitungsvorrichtung, eine Getränkezubereitungsvorrichtung und ein Verfahren zum Betrieb eines Milchmoduls einer Getränkezubereitungsvorrichtung vorzuschlagen, die die Nachteile im Stand der Technik überwinden und insbesondere eine effektive Steuerung eines Milchmoduls in Abhängigkeit der Temperatur der bereitgestellten Milch oder des bereitgestellten Milchprodukts erlauben.

Diese Aufgabe wird im Hinblick auf das Milchmodul mit den Merkmalen des unabhängigen Anspruchs 1 gelöst. Bezüglich einer Getränkezubereitungsvorrichtung wird die Aufgabe mit einer Vorrichtung mit den Merkmalen des Anspruchs 10 gelöst. Ein dazugehöriges Verfahren zum Betrieb eines Milchmoduls einer Getränkezubereitungsvorrichtung ist im unabhängigen Anspruch 12 angegeben.

Vorteilhafte Ausführungsformen der Erfindung sind Gegenstand der nachfolgenden Beschreibung, der Figurenbeschreibung, der Figuren sowie der Unteransprüche.

Zur Vermeidung von unnötigen Wiederholungen sollen nachfolgend alle verfahrensmäßig offenbarten Merkmale auch als entsprechend vorrichtungsmäßig offenbart und beanspruchbar gelten, und umgekehrt.

Das erfindungsgemäße Milchmodul für eine Getränkezubereitungsvorrichtung, insbesondere eine Kaffee- und/oder Espressomaschine umfasst einen Eingangsanschluss zur Verbindung mit einem Milchvorratsbehälter. Weiter ist vom Milchmodul eine Erwärm- und/oder Aufschäumvorrichtung umfasst, die fluidleitend mit dem Eingangsanschluss verbunden ist. Weiterhin umfasst das Milchmodul einen Auslauf der seinerseits wiederum fluidleitend mit der Erwärm- und/oder Aufschäumvorrichtung ausgebildet ist. Dadurch kann ein Milchprodukt von dem Eingangsanschluss über die Erwärm- und/oder Aufschäumvorrichtung zum Auslauf geführt werden und dabei erwärmt und/oder aufgeschäumt werden.

Erfindungsgemäß ist zudem vorgesehen, dass fluidleitend zwischen dem Eingangsanschluss und der Erwärm- und/oder Aufschäumvorrichtung ein steuerbares Ventil angeordnet ist, welches den Milchfluss jenseits, insbesondere stromabwärts, des Ventils steuert und wobei in einem Leitungsabschnitt zwischen dem Eingangsanschluss und dem Ventil ein Temperatursensor so angeordnet ist, dass der Temperatursensor in unmittelbarem Kontakt mit dem Milchprodukt im Leitungsabschnitt ist und bringbar ist.

Die Erfindung beruht auf der Grundidee, dass es für weitestgehend konstante Ergebnisse des erwärmten und/oder aufgeschäumten Milchprodukts abhängig von der Eingangstemperatur oder der vorherrschenden Temperatur des Milchprodukts im Milchvorratsbehälter ausreichend ist diese Temperatur oder Eingangstemperatur des Milchprodukts kurz vor der Erwärmung und/oder Aufschäumung zu erkennen oder zu erfassen, und dass es zudem für entsprechend konstante und reproduzierbare Ergebnisse ausreichend ist, wenn in Abhängigkeit der erfassten Temperatur oder Eingangstemperatur des Milchprodukts eine Einstellung oder erzwungene Drosselung des Volumenflusses durch das Milchmodul mittels eines Ventils bereitgestellt wird, ohne dass die Pumpe oder der Pumpmechanismus, der zur Förderung des Milchprodukts eingesetzt wird, unmittelbar oder direkt beeinflusst wird.

Mit anderen Worten ausgedrückt bedeutet dies, dass für ein vorgegebenes Produkt oder Getränk mit erwärmter und/oder aufgeschäumter Milch/Milchprodukt die primären Fördermechanismen, beispielsweise der Betrieb einer Strahlpumpe oder Venturidüse unbeeinflusst bleibt oder unabhängig von der Temperatur des Milchprodukts betrieben wird und lediglich sekundär der Volumenfluss des Milchprodukts durch das Milchmodul anhand eines Ventils beeinflusst oder gesteuert wird, wobei diese Steuerung von einem erfassten Temperaturwert abhängt, der erfassbar ist, gemessen werden kann oder bereitsteht, wenn das Milchprodukt in das Milchmodul eingeführt oder eingeleitet wurde.

Dabei ist überraschend, dass die nicht vermeidbare, endliche Latenzzeit, die benötigt wird, um von dem Temperatursensor zuverlässige Messinformationen oder Messdaten über die Temperatur des Milchprodukts zu erhalten und daraufhin das Ventil entsprechend einer vordefinierten Korrelation zwischen Milchtemperatur und Ventilstellung anzusteuern, keinen merkbaren Einfluss auf das im Endeffekt insgesamt abgegebene Milchprodukt hat. Damit kann mit einem sehr viel einfacheren Geräteaufbau und mit einer sehr viel einfacheren Steuerungstechnik über einen großen Temperaturbereich von Eingangstemperaturen des Milchprodukts ein konstantes gleichbleibendes Ergebnis gemäß einer entsprechenden Vorgabe erreicht werden.

Das Milchmodul kann bevorzugt verschiedene fest mit der Getränkezubereitungsvorrichtung verbundene Versorgungszuleitungen aufweisen, die beispielsweise eingesetzt werden, um Dampf, Heißwasser, Kaltwasser und/oder Reinigungs- oder Spülfluid an das Milchmodul abzugeben oder zu übertragen.

Der Milchvorratsbehälter kann, wie oben bereits ausgeführt, bevorzugt entnehmbar ausgestaltet sein und lösbar mit dem Milchmodul und/oder der Getränkezubereitungsvorrichtung ausgebildet sein. Dazu kann das Milchmodul und/oder der Milchvorratsbehälter einen Schlauch oder eine Leitung aufweisen, die dann entweder den Eingangsanschluss ausbilden oder mit dem Eingangsanschluss verbindbar sind. Hierzu können bevorzugt Steck- und/oder Rastverbindungen zum Einsatz kommen.

Die Erwärm- und/oder Aufschäumvorrichtung kann beispielsweise als einstufige oder mehrstufige, serielle, oder parallele Strahlpumpe oder Venturidüse ausgestaltet sein über die das Milchprodukt angesaugt und/oder aufgeschäum wird. Alternativ kann die Aufschäumung über eine poröse Membran bereitgestellt werden und die Erwärmung über einen direkten oder indirekten Wärmetauschmechanismus bewirkt werden kann. Wenn keine Venturidüse, sondern ein anderer Fördermechanismus zum Einsatz kommt, kann die Förderung des Milchprodukts vorteilhaft über eine Fluidpumpe, beispielsweise eine Rollenpumpe, erreicht werden.

Der Auslauf kann beispielsweise einen einzelnen Auslauf oder einen verzweigten Auslauf mit zwei Auslauföffnungen aufweisen. Bevorzugt kann das Milchmodul mehrere voneinander trennbare Komponenten aufweisen. Beispielsweise kann sich eine erste Komponente von einem Eingangsanschluss bis zu einem Übergang zu der Erwärm- und/oder Aufschäumvorrichtung erstrecken. Eine zweite Komponente kann die wesentlichen Bauteile der Erwärm- und Aufschäumvorrichtung umfassen und an einem Übergang zum Auslauf enden. Eine dritte Komponente kann dann im Wesentlichen den Auslauf umfassen. Die Unterteilbarkeit oder Trennbarkeit kann besonders vorteilhaft genutzt werden, um das Milchmodul effektiv zu reinigen.

In einer ersten vorteilhaften Ausführungsform des Milchmoduls kann vorgesehen sein, dass das Ventil als eine einstellbare Drossel mit diskreten Stellzuständen ausgebildet ist. Dies erlaubt eine technisch einfachere Realisierung des Ventils und der beabsichtigen Beeinflussung des Volumenflusses durch das Milchmodul. Die diskreten Stellzustände erlauben eine einfachere Ansteuerung des Ventils oder der Drossel, ohne dass dadurch das Endprodukt, also das erwärmte und/oder aufgeschäumte Milchprodukt in seinen Eigenschaften zu stark unterschiedlich ausgebildet ist. Mit anderen Worten ausgedrückt kann einem gewissen Temperaturbereich der Eingangstemperatur des Milchprodukts eine entsprechende Stellung der Drossel oder des Ventils zugeordnet sein, so dass nach der Erkennung/Messung der Temperatur über den Temperatursensor die Stellung des Ventils eingestellt wird, die über die Verknüpfung mit dem jeweiligen Temperaturbereich vorgesehen ist.

In einer weiteren, vorteilhaften Ausgestaltung kann vorgesehen sein, dass die Bestandteile des Milchmoduls zwischen Eingangsanschluss und Auslass entnehmbar, bevorzugt werkzeuglos aus dem Milchmodul entnehmbar, ausgebildet sind, wobei der Temperatursensor fest mit dem Milchmodul verbunden ausgebildet ist. Dies hat verschiedene Vorteile. Einerseits erlaubt die entnehmbare, insbesondere werkzeuglos entnehmbare Ausgestaltung der Komponenten oder Bestandteile des Milchmoduls eine einfache und effektive Reinigung des Milchmoduls. Weiterhin erlaubt die entnehmbare Ausbildung eine einfache und effektive Reparatur für den Fall, dass ein Bauteil oder eine Komponente zu stark verschmutzt, zu stark verschlissen oder ansonsten unbrauchbar geworden ist.

Die feste Verbindung zwischen dem Milchmodul und dem Temperatursensor hat den Vorteil, dass auch der Temperatursensor, insbesondere im Anschluss an die Entnahme der sonstigen Bestandteile des Milchmoduls gut gereinigt werden kann. Weiterhin erlaubt dies eine einfache und robuste elektronische und/oder datentechnische Anbindung des Temperatursensors, da diese Anbindung oder Verbindung dann gerade nicht trennbar oder reversibel ausgebildet sein muss, sondern entsprechend permanent und dauerhaft ausgestaltet sein kann.

In einer weiteren, besonders wünschenswerten Ausführungsform des Milchmoduls kann vorgesehen sein, dass ein Ventilkörper des Ventils mit dem Leitungsabschnitt entnehmbar ausgebildet ist und/oder einteilig, bevorzugt monolithisch, im Leitungsabschnitt ausgebildet ist.

Dies hat den Vorteil, dass zunächst die Gesamtanzahl an Bauteilen verringert wird, da nicht beispielsweise zunächst eine Leitung von dem Eingangsanschluss bis zu einem Eingang des Ventils bereitgestellt werden muss und auch am Ausgang des Ventils oder am entsprechenden Ventilkörper erneut eine Leitung, beispielsweise zum Eingang einer Erwärm- und/oder Aufschäumvorrichtung bereitgestellt werden muss. Weiterhin erleichtert dies auch die Montage, da das Ventil zum Teil, insbesondere im Rahmen des Ventilkörpers, bereits in dem Leitungsabschnitt ausgebildet oder ausgeformt ist, in dem auch der Temperatursensor im montierten Zustand angeordnet ist. Weiterhin wird dadurch in besonders vorteilhafter Weise die Reinigung des Milchmoduls erleichtert. Denn ein Entnehmen des Leitungsabschnitts führt dann dazu, dass, insbesondere wenn der Temperatursensor selbst fest mit dem Milchmodul und/oder der Getränkezubereitungsvorrichtung verbunden ist/verbunden bleibt, nicht nur der Sensor selbst gut gereinigt werden kann, sondern in dem entnommenen Leitungsabschnitt auch der Sitz des Temperatursensors und der mit dem Leitungsabschnitt zusammen entnehmbare und/oder monolithisch mit dem Leitungsabschnitt ausgebildete Ventilkörper leicht und effektiv gereinigt werden kann.

In einer weiteren, besonders vorteilhaften Ausführungsform kann auch vorgesehen sein, dass ein Stellglied des Ventils, bevorzugt eine Blende, fest mit dem Milchmodul verbunden ist. Das Stellglied des Ventils kann mit einer mechanischen und/oder elektromechanischen Stelleinheit verbunden sein, die das Stellglied antreibt, beispielsweise rotatorisch antreibt. Das Stellglied, bevorzugt die Blende, wirkt zusammen mit dem Ventilkörper als Ventil. Dazu wird das Stellglied, beispielsweis die Blende, in den Ventilkörper eingebracht und dort verstellt, sodass der effektive Querschnitt und damit der Volumenfluss durch das Ventil beeinflusst oder gesteuert werden kann.

Wenn das Stellglied fest mit dem Milchmodul verbunden ist, führt dies dazu, dass bei einer Entnahme von sonstigen Bauteilen oder Komponenten des Milchmoduls, beispielsweise einem Leitungsabschnitt mit samt Ventilkörper, das Stellglied leicht freigelegt werden kann und dementsprechend auch leicht gereinigt und/oder ersetzt werden kann.

Außerdem führt die vorgenannte Ausbildungsform dazu, dass sowohl die Entnahme als auch das Wiedereinsetzen von Komponenten des Milchmoduls, insbesondere des Leitungsabschnitts besonders einfach erfolgen kann. So kann durch die feste Verbindung zwischen Milchmodul und Temperatursensor und/oder Stellglied erreicht werden, dass der Leitungsabschnitt einfach aus dem Milchmodul herausgenommen, beispielsweise herausgezogen, werden kann, ohne dass der Bediener besondere Vorkehrungen treffen muss oder besondere Fachkenntnis besitzen muss. Gleichzeitig kann auch das Einsetzen des Leitungsabschnitts besonders einfach durch ein Wiedereinstecken oder Wiederaufstecken auf das Stellglied und/oder dem Temperatursensor ermöglicht werden.

In einer besonders vorteilhaften Ausgestaltung des Milchmoduls kann zudem vorgesehen sein, dass das Stellglied ein Dichtmittel, bevorzugt ein Dichtwulst, aufweist, das mit einer komplementären Kontur des Ventilkörpers, insbesondere des Leitungsabschnitts, im Eingriff steht. Dies sorgt in besonders vorteilhafter Weise dazu, dass das Ventil nach außen abgedichtet wird und bei einem eingesetzten Stellglied oder einem umgekehrt eingesetzten Leitungsabschnitt/Ventilkörper kein Milchprodukt an ungewünschten Positionen des Ventils austritt, sondern das Milchprodukt lediglich von einem Ventileingang zu einem Ventilausgang geleitet und dabei der Volumenfluss geregelt oder eingestellt wird.

Gemäß einer weiteren, besonders vorteilhaften Ausführungsform des Milchmoduls kann vorgesehen sein, dass dieses ein Gehäuse mit einem, bevorzugt werkzeuglos, entnehmbaren Deckel aufweist. Dadurch können unbeabsichtigte Manipulationen des Milchmoduls verhindert werden. Außerdem kann der abnehmbare Deckel dazu dienen die Bauteile oder Komponenten des Milchmoduls im montierten Zustand an Ort und Stelle zu sichern. Durch die bevorzugt werkzeuglose Entnahmemöglichkeit des Deckels kann weiterhin erreicht werden, dass die Bauteile oder Komponenten des Milchmoduls leicht zugänglich sind, beispielsweise um diese zu reinigen, zu warten, zu ersetzen od. dgl.

Gemäß einer weiteren, vorteilhaften Ausführungsform kann vorgesehen sein, dass der Temperatursensor durch eine Öffnung, beispielsweise mit kreisrundem oder kreisähnlichem Querschnitt, in den Leitungsabschnitt hineinragt. Dadurch kann sichergestellt werden, dass der Temperatursensor im montierten Zustand des Milchmoduls, insbesondere des Leitungsabschnitts in direktem Medienkontakt mit dem Milchprodukt steht. Dadurch kann eine schnelle und präzise Temperaturmessung gewährleistet werden.

Weiter kann vorteilhaft vorgesehen sein, dass der Temperatursensor gegenüber dem Milchmodul und/oder der Getränkezubereitungsvorrichtung über eine Einfachisolierung thermisch entkoppelt ist. Dies verhindert eine Beeinflussung der Temperaturmessung durch die Temperatur in der Getränkezubereitungsvorrichtung oder in der Nähe der Getränkezubereitungsvorrichtung.

Gemäß einer weiteren, besonders vorteilhaften Ausgestaltung des Milchmoduls kann vorgesehen sein, dass der Leitungsabschnitt aus einem wenigstens teilweise elastischen Material, bevorzugt Silikon- und/oder Gummimaterial, gebildet ist. Dies erlaubt sowohl eine einfache Entnahme sowie ein einfaches Einsetzen des Leitungsabschnitts in das Milchmodul und ferner eine gute Dichtwirkung zwischen dem Leitungsabschnitt und dem Temperatursensor und/oder dem Leitungsabschnitt und dem Stellglied des Ventils, insbesondere wenn der Ventilkörper monolithisch vom Leitungsabschnitt ausgebildet wird oder ansonsten einstückig in dem Leitungsabschnitt integriert ist. Weiterhin ist solches Material lebensmittelkompatibel und gut zu reinigen. Auch andere Teile des Milchmoduls können vorteilhaft aus einem entsprechenden Material gebildet sein.

Die oben genannte Aufgabe wird auch durch eine Getränkezubereitungsvorrichtung, insbesondere eine Kaffee- und/oder Espressomaschine, mit einem, bevorzugt fest mit der Getränkezubereitungsvorrichtung verbundenen Milchmodul gemäß einer der vorangehend dargestellten Ausführungsformen gelöst. Dies ermöglicht in besonders vorteilhafter Weise die Bereitstellung von erwärmten und/oder aufgeschäumten Milchprodukten mit gleichbleibenden Eigenschaften unabhängig von der Eingangstemperatur des Milchprodukts im Milchvorratsbehälter. Die Getränkezubereitungsvorrichtung ist bevorzugt so ausgebildet, dass über eine trennbare Verbindung, beispielsweise eine Schlauch- oder Leitungsverbindung eine Koppelung zwischen einem Milchvorratsbehälter und dem Eingangsanschluss des Milchmoduls hergestellt und getrennt werden kann. Die Trennung erfolgt regelmäßig, um den Milchvorratsbehälter gekühlt, beispielsweise in einem Kühlschrank, aufzubewahren.

Die Getränkezubereitungsvorrichtung kann voreilhaft eine Getränkesubstratbevorratungseinrichtung, bevorzugt einen Kaffeebohnenbehälter, eine Mahleineheit, eine Brüheinheit, eine Heizeinrichtung zum Erwärmen von Fluiden, einen Frischwassertank und/oder Auffangbehältnisse zum Anfangen von Restwasser und/oder ausgelaugtem Getränkesubstrat aufweisen.

In einer vorteilhaften Ausführungsform der Getränkezubereitungsvorrichtung kann vorgesehen sein, dass diese eine, bevorzugt computerbasierte, Steuereinheit aufweist, die dazu eingerichtet ist, vom Temperatursensor erzeugte Messdaten zu empfangen und in Abhängigkeit der empfangenen Messdaten eine Stellvorrichtung zur Verstellung des Ventils anzusteuern. Die Stellvorrichtung kann grundsätzlich dem Milchmodul oder der Getränkezubereitungsvorrichtung zugeordnet sein. Die Steuerung kann, wie oben bereits angedeutet, beispielsweise so ausgestaltet sein, dass verschiedenen Bereichen von Eingangstemperaturen des Milchprodukts verschiedene diskrete Ventilstellungen des Ventils zugeordnet sind, die jeweils einen bestimmten Volumenfluss durch das Ventil ermöglichen, sodass die Steuereinheit in Reaktion auf die empfangenen Messdaten und/oder Temperaturen die Stellvorrichtung zur Einstellung der entsprechenden Ventilposition ansteuert. Die Steuereinheit kann auch als zentrale Steuereinheit ausgebildet sein, die auch weitere Funktionen der Getränkezubereitungsvorrichtung steuert.

Die oben genannte Aufgabe wird ferner durch ein Verfahren zum Betrieb eines Milchmoduls einer Getränkezubereitungsvorrichtung, insbesondere einer Kaffee- und/oder Espressomaschine gelöst, wobei das Verfahren vorsieht, dass ein Milchprodukt von einem, bevorzugt separaten, Milchvorratsbehälter zu einem Eingangsanschluss des Milchmoduls gefördert wird, wobei weiter bevorzugt die Förderung mittels einer vom Milchmodul umfassten Strahlpumpe und/oder Venturi-Düse bewerkstelligt wird.

In einem weiteren Verfahrensschritt wird das Milchprodukt von dem Eingangsanschluss zu einem Auslauf des Milchmoduls geführt und/oder gefördert, wobei das Milchprodukt eine Erwärm- und/oder Aufschäumvorrichtung durchfließt, die fluidleitend mit dem Eingangsanschluss und dem Auslauf verbunden ist, so dass das Milchprodukt erwärmt und/oder aufgeschäumt wird, bevor es durch den Auslauf abgegeben oder ausgegeben wird.

Erfindungsgemäß ist dabei vorgesehen, dass die Temperatur des in das Milchmodul eintretenden Milchprodukts mit einem Temperatursensor gemessen wird und in Abhängigkeit der gemessenen Temperatur ein fluidleitend zwischen dem Eingangsabschluss und der Erwärm- und/oder Aufschäumvorrichtung angeordnetes, steuerbares Ventil gesteuert wird, welches den Milchfluss jenseits des Ventils steuert und wobei die Temperatur in einem Leitungsabschnitt zwischen dem Ventil und dem Eingangsanschluss mit dem Temperatursensor gemessen wird, wobei der Temperatursensor in unmittelbarem Kontakt mit dem Milchprodukt ist.

Wie oben bereits ausgeführt, wird dadurch eine gleichermaßen baulich und steuerungstechnisch einfache Lösung realisiert, die dennoch dazu führt, dass das Milchprodukt am Auslauf mit gewünschten oder vorgegebenen Eigenschaften zur Verfügung steht, unabhängig davon mit welcher Eingangstemperatur das Milchprodukt bereitgestellt wurde oder dem Milchmodul zur Verfügung gestellt wurde. Bezüglich der sonstigen Vorteile und Wirkungen wird auf die vorangehende Beschreibung des Milchmoduls verwiesen.

In einer vorteilhaften Ausgestaltung des Verfahrens kann vorgesehen sein, dass das Ventil vor dem Beginn oder zum Beginn der Förderung des Milchprodukts in eine teilweise geöffnete, bevorzugt diskrete, Anfangsstellung überführt wird. Dies hat sich als besonders vorteilhaft herausgestellt, um nach Erreichen einer stabilen oder zuverlässigen Temperaturmessung durch den Temperatursensor möglichst schnell in die gewünschte Ventilstellung schalten oder steuern zu können. Außerdem wird dadurch sichergestellt, dass zu Beginn nicht zu viel Milchprodukt das Milchmodul passiert und somit einen zu großen Einfluss auf das Gesamtergebnis des erwärmten und/oder aufgeschäumten Milchprodukts ausübt.

In einer weiteren, vorteilhaften Ausgestaltung des Verfahrens kann vorgesehen sein, dass das Einstellen des Ventils in Abhängigkeit von der gemessenen Temperatur erfolgt bevor 60ml, bevorzugt bevor 50ml Milchprodukt das Ventil passiert haben. Dadurch kann sichergestellt werden, dass im Endergebnis das ausgegebene Milchprodukt nach der Aufwärmung und/oder Aufschäumung innerhalb von sehr engen Grenzen von vorgegebenen Parametern und Eigenschaften liegt.

Vorteilhafte Ausführungsformen der Erfindung werden nachfolgend anhand von lediglich Ausführungsbeispiele zeigenden, schematischen Zeichnungen erläutert werden. Darin zeigen:
- Fig.1:: ein Schnitt durch ein erfindungsgemäßes Milchmodul einer erfindungsgemäßen Getränkezubereitungsvorrichtung in einer ersten Ausführungsform;
- Fig.2:: eine Draufsicht auf einen Leitungsabschnitt eines erfindungsgemäßen Milchmoduls.

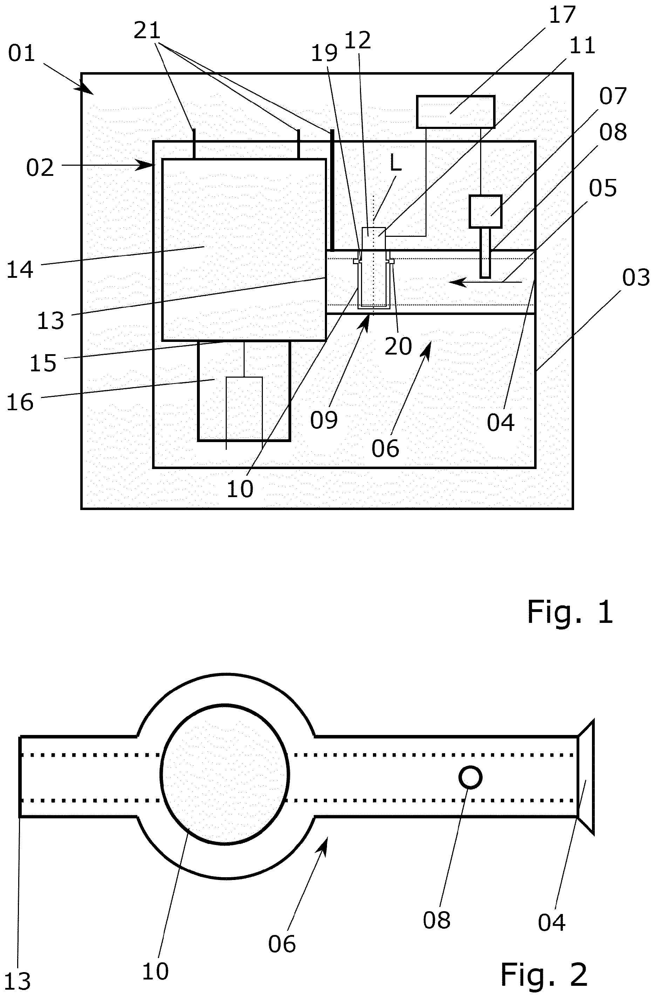

Fig. 1 zeigt schematisch einen Teil einer Getränkezubereitungsvorrichtung 01 mit einem Milchmodul 02. Das Milchmodul ist schematisiert in einer Schnittdarstellung dargestellt und umfasst zunächst ein Gehäuse 03, welches mit einem in der Schnittdarstellung nicht dargestellten Deckel versehen sein kann, der abnehmbar oder entnehmbar, insbesondere werkzeuglos entnehmbar ausgebildet sein kann. Das Milchgehäuse 02 umfasst einen Eingangsanschluss 04, der bevorzugt Kopplungsmittel, beispielsweise Rastmittel, aufweist um einen Milchvorratsbehälter (nicht dargestellt) direkt oder über eine Schlauchverbindung anzuschließen oder zu koppeln.

Der Richtungspfeil 05 gibt die Flussrichtung des Milchprodukts innerhalb des Milchmoduls 02 an. Nach dem Eintritt des Milchprodukts in das Milchmodul 02 über den Eingangsanschluss 04 passiert das Milchprodukt im Inneren eines Leitungsabschnitts 06 zunächst einen Temperatursensor 07, welcher in direktem Fluidkontakt oder in unmittelbarem Kontakt mit dem Milchprodukt im Leitungsabschnitt 06 angeordnet ist. Dazu ragt der Temperatursensor 07 durch eine Öffnung 08 im Leitungsabschnitt 06 in den Leitungsabschnitt 06 hinein.

Nach dem Passieren des Temperatursensors 07 fließt das Milchprodukt entlang des Leitungsabschnitts 06 bis zu einem Ventil 09. Das Ventil 09 wird im Wesentlichen aus einem Ventilkörper 10 und einem Stellglied 11 gebildet. Der Ventilkörper 10 ist bevorzugt einstückig, insbesondere monolithisch, mit dem Leitungsabschnitt 06 oder in dem Leitungsabschnitt 06 ausgebildet. Das Stellglied 11 ist mit einer Stellvorrichtung 12 verbunden, die in der Lage ist das Stellglied 11 zu verstellen oder anzutreiben, beispielsweise rotatorisch um eine Längsachse L zu verstellen.

In dem Stellglied 11 kann eine nicht im Detail dargestellte Kulisse oder Blende ausgenommen sein, die abhängig von der Stellposition des Stellglieds 11 eine variable Menge oder einen variablen Volumenfluss an Milchprodukt das Ventil 09 passieren lässt. Nach dem Passieren des Ventils 09 verlässt das Milchprodukt den Leitungsabschnitt 06 und tritt an einer Schnittstelle 13 in eine Erwärm- und/oder Aufschäumvorrichtung 14 ein. Die Details der Erwärm- und Aufschäumvorrichtung sind nicht dargestellt. Es kann sich dabei beispielsweise um eine oder mehrere Venturi-Düsen oder Strahlpumpen handeln, die das Milchprodukt erwärmt, aufschäumt und/oder ansaugt/fördert.

An einem Ausgang 15 der Erwärm- und/oder Aufschäumvorrichtung 14 schließt sich ein Auslauf 16 an, durch den das erwärmte und/oder aufgeschäumte Milchprodukt aus dem Milchmodul ausgegeben wird.

Die Erwärm- und Aufschäumvorrichtung 14 ist über Zuleitungen 21 mit der Getränkezubereitungsvorrichtung 01 verbunden, über die beispielsweise Heißwasser, Kaltwasser, Wasserdampf, Druckluft oder dergleichen bereitgestellt werden kann.

Die Getränkezubereitungsvorrichtung 01 umfasst eine, bevorzugt computerbasierte Steuereinheit 17, die dazu eingerichtet ist Messdaten des Temperatursensors 07 zu empfangen und in Abhängigkeit der empfangenen Messdaten die Stellvorrichtung 12 des Ventils 09 anzusteuern.

Bevor das Milchmodul 02 in Betrieb genommen wird oder das Erwärmen und/oder Aufschäumen eines Milchprodukts initiiert wird, kann von der Steuereinheit ein entsprechender Steuerbefehl erzeugt werden, um das Ventil 09, welches beispielsweise als einstellbare Drossel mit diskreten Stellzuständen ausgebildet sein kann, in eine teilweise geöffnete Ausgangsstellung zu überführen. Im Anschluss daran wird entweder über die Erwärm- und Aufschäumvorrichtung 14 oder eine weitere, in der Fig. 1 nicht dargestellte Pumpe, der Fluss des Milchprodukts initiiert und das Milchprodukt wird an dem Eingangsanschluss 04 bereitgestellt.

Während das Milchprodukt den Temperatursensor 07 passiert, werden Temperaturmessungen vorgenommen. Diese Messungen könnn zu Beginn vorteilhaft fortlaufend oder in sehr kurzen Zeitabständen (Bruchteilen einer Sekunde) vorgenommen werden, um möglichst kurzfristig ein Stabilisieren des Messwerts nach einem Einschwingvorgang feststellen zu können. Sobald eine stabile oder sichere Temperaturmessung vorliegt, wird in Abhängigkeit der ermittelten Temperatur das Ventil 09 eingestellt und der Volumenfluss oder Durchfluss durch das Milchmodul 02, insbesondere durch die Erwärm- und Aufschäumvorrichtung 14 gesteuert. Dadurch kann den unterschiedlichen Eingangstemperaturen des Milchprodukts Rechnung getragen werden und somit ein im Wesentlichen gleichbleibendes Milchprodukt gemäß vorgegebener Eigenschaften oder Parameter bereitgestellt werden.

Bevorzugt kann der Temperatursensor 07 und/oder das Stellglied 11 fest mit dem Milchmodul 02 verbunden ausgebildet sein. Im Gegensatz dazu kann bevorzugt der Leitungsabschnitt 06 zwischen dem Eingangsanschluss 04 und der Schnittstelle 13 entnehmbar ausgebildet sein. In diesem Fall bleibt bei der Entnahme des Leitungsabschnitts 06 das Stellglied 11 und der Temperatursensor 07 im Milchmodul 02 zurück. Die Erwärm- und Aufschäumvorrichtung 14 und der Auslauf 16 können vorteilhaft auch entnehmbar ausgebildet sein. Der Leitungsabschnitt 06 ist zum einfachen Entnehmen, und zur ausreichenden Dichtung zwischen Stellglied 11 und Ventilkörper 10 sowie zwischen Temperatursensor 07 und der Öffnung 08 vorteilhaft aus einem teilweise elastischen Material, bevorzugt Gummi oder Silikon gebildet.

Fig. 2 zeigt eine Draufsicht auf ein aus dem Milchmodul 02 der Fig. 1 entnommenen und separat dargestellten Leitungsabschnitt 06. In der Fig. 2 ist erkennbar, dass am Eingangsanschluss 04 Verbindungsmittel oder Rastmittel ausgebildet sind. Weiterhin ist die Öffnung 08 erkennbar, durch die der Temperatursensor 07 in das Innere des Leitungsabschnitts 06 hereinragt und dort in direkten Kontakt mit dem Milchprodukt kommt. Weiterhin ist der Ventilkörper 10 erkennbar, in den im eingesetzten Zustand des Leitungsabschnitts 06 das Stellglied 11 eingreift. In der Fig. 2 ist nochmals dargestellt, dass der Ventilkörper 10 einstückig, insbesondere monolithisch, im Leitungsabschnitt 06 ausgebildet ist. Um eine gute Dichtwirkung zwischen Stellglied 11 und Ventilkörper 10 im eingesetzten Zustand herzustellen, umfasst das Stellglied 11 Dichtmittel, bevorzugt eine Dichtwulst 19, die im Eingriff mit einer komplementären Kontur 20 des Ventilkörpers 10 steht (Fig. 1).

### Bezugszeichen

- 01: Getränkezubereitungsvorrichtung
- 02: Milchmodul
- 03: Gehäuse
- 04: Eingangsanschluss
- 05: Richtungspfeil
- 06: Leitungsabschnitt
- 07: Temperatursensor
- 08: Öffnung
- 09: Ventil
- 10: Ventilkörper
- 11: Stellglied
- 12: Stellvorrichtung
- 13: Schnittstelle
- 14: Erwärm- und Aufschäumvorrichtung
- 15: Ausgang
- 16: Auslauf
- 17: Steuereinheit
- 19: Dichtwulst
- 20: Kontur
- 21: Zuleitungen
- L: Längsachse

## Patentansprüche

1. Milchmodul für eine Getränkezubereitungsvorrichtung (01), insbesondere eine Kaffee- und/oder Espressomaschine, mit einem Eingangsanschluss (04) zur Verbindung mit einem Milchvorratsbehälter, mit einem Erwärm- und/oder Aufschäumvorrichtung (14), die fluidleitend mit dem Eingangsanschluss (04) verbunden ist und einem Auslauf (16), der fluidleitend mit der Erwärm- und/oder Aufschäumvorrichtung (14) ausgebildet ist, so dass ein Milchprodukt von dem Eingangsanschluss (04) über die Erwärm- und/oder Aufschäumvorrichtung (14) zum Auslauf (16) geführt und dabei erwärmbar und/oder aufschäumbar ist,
**dadurch gekennzeichnet,**
**dass** fluidleitend zwischen Eingangsanschluss (04) und der Erwärm- und/oder Aufschäumvorrichtung (14) ein steuerbares Ventil (09) angeordnet ist, welches den Milchfluss jenseits des Ventils (09) steuert und wobei in einem Leitungsabschnitt (06) zwischen dem Ventil (09) und dem Eingangsanschluss (04) ein Temperatursensor (07) so angeordnet ist, dass der Temperatursensor (07) in unmittelbaren Kontakt mit der Milch im Leitungsabschnitt (06) bringbar ist.

2. Milchmodul nach Anspruch 1,
**dadurch gekennzeichnet,**
**dass** das Ventil (07) als einstellbare Drossel mit diskreten Stellzuständen ausgebildet ist.

3. Milchmodul nach Anspruch 1 oder 2,
**dadurch gekennzeichnet,**
**dass** die Bestandteile des Milchmoduls (02) zwischen Eingangsanschluss (04) und Auslass (16) entnehmbar, bevorzugt werkzeuglos entnehmbar, ausgebildet sind, wobei der Temperatursensor (07) fest mit dem Milchmodul verbunden ausgebildet ist.

4. Milchmodul nach einem der vorangehenden Ansprüche,
**dadurch gekennzeichnet,**
**dass** ein Ventilkörper (10) des Ventils (09) mit dem Leitungsabschnitt (06) entnehmbar ausgebildet und/oder monolithisch im Leitungsabschnitt (06) ausgebildet ist.

5. Milchmodul nach einem der vorangehenden Ansprüche,
**dadurch gekennzeichnet,**
**dass** ein Stellglied (11) des Ventils (09), bevorzugt eine Blende, fest mit dem Milchmodul (02) verbunden ausgebildet ist.

6. Milchmodul nach Anspruch 5,
**dadurch gekennzeichnet,**
**dass** das Stellglied (11) ein Dichtmittel, bevorzugt einen Dichtungswulst (19), aufweist, das mit einer komplementären Kontur (20) des Ventilköpers (10), insbesondere des Leitungsabschnitts (06), im Eingriff steht.

7. Milchmodul nach einem der vorangehenden Ansprüche,
**gekennzeichnet durch**
ein Gehäuse (03) mit einem, bevorzugt werkzeuglos, entnehmbaren Deckel.

8. Milchmodul nach einem der vorangehenden Ansprüche,
**dadurch gekennzeichnet,**
**dass** der Temperatursensor (07) durch eine Öffnung (08) in den Leitungsabschnitt (06) hineinragt.

9. Milchmodul nach einem der vorangehenden Ansprüche,
**dadurch gekennzeichnet,**
**dass** der Leitungsabschnitt (06) aus einem wenigstens teilweise elastischen Material, bevorzugt Silikon- und/oder Gummimaterial, gebildet ist.

10. Getränkezubereitungsvorrichtung, insbesondere eine Kaffee- und/oder Espressomaschine, mit einem, bevorzugt fest mit der Getränkezubereitungsvorrichtung verbundenen, Milchmodul (02) nach einem der Ansprüche 1 bis 9.

11. Getränkezubereitungsvorrichtung nach Anspruch 10,
**gekennzeichnet durch**
eine, bevorzugt computerbasierte, Steuereinheit (17), die dazu eingerichtet ist vom Temperatursensor (07) erzeugte Messdaten zu empfangen und in Abhängigkeit der empfangenen Messdaten eine Stellvorrichtung (12) zur Verstellung des Ventils (09) anzusteuern.

12. Verfahren zum Betrieb eines Milchmoduls (02) einer eine Getränkezubereitungsvorrichtung (01), insbesondere einer Kaffee- und/oder Espressomaschine, mit den folgenden Verfahrensschritten:
- Fördern eines Milchprodukts von einem, bevorzugt separaten Milchvorratsbehälter, zu einem Eingangsanschluss (04) des Milchmoduls (02), bevorzugt mittels einer vom Milchmodul umfassten Strahlpumpe;
- Führen des Milchprodukts zu einem Auslauf (16) des Milchmoduls (02), wobei das Milchprodukt eine Erwärm- und/oder Aufschäumvorrichtung (14) durchfließt, die fluidleitend mit dem Eingangsanschluss (04) und dem Auslauf (16) verbunden ist, so dass das Milchprodukt erwärmt und/oder aufgeschäumt wird, **dadurch gekennzeichnet**,
die Temperatur des in das Milchmodul (02) eintretenden Milchprodukts mit einem Temperatursensor (07) gemessen wird und in Abhängigkeit der gemessenen Temperatur ein fluidleitend zwischen Eingangsanschluss (04) und der Erwärm- und/oder Aufschäumvorrichtung (14) angeordnetes, steuerbares Ventil (09) gesteuert wird, welches den Milchfluss jenseits des Ventils (09) steuert und wobei die Temperatur in einem Leitungsabschnitt (06) zwischen dem Ventil (09) und dem Eingangsanschluss (04) mit dem Temperatursensor (07) gemessen wird, wobei der Temperatursensor (07) in unmittelbaren Kontakt mit dem Milchprodukt ist.

13. Verfahren nach Anspruch 12,
**dadurch gekennzeichnet,**
**dass** das Ventil (09) vor dem oder zum Beginn der Förderung des Milchprodukts in eine teilweise geöffnete Anfangsstellung überführt wird.

14. Verfahren nach Anspruch 12 oder 13,
**dadurch gekennzeichnet,**
**dass** das ein Einstellung des Ventils (09) in Abhängigkeit von der gemessenen Temperatur erfolgt, bevor 60ml, bevorzugt bevor 50ml, Milchprodukt das Ventil passiert haben.
